# EUROPEAN PATENT APPLICATION

(11) **EP 4 778 766 A1**
(43) Date of publication of application: **22.07.2026**
(21) Application number: 26150813.9
(22) Date of filing: 08.01.2026
(51) Int. Cl.: B60K 35/29, B60K 35/10, B60K 35/22, B60K 35/28, B60K 35/60, B60K 35/65, B60W 30/182

(54) **IN-VEHICLE SYSTEM AND INFORMATION PROCESSING APPARATUS**

(30) Priority: 21.01.2025 JP 2025008564
(71) Applicant: Toyota Jidosha Kabushiki Kaisha, Toyota-shi, Aichi-ken 471-8571 (JP)
(72) Inventor: TANIZAWA, Tatsuya, Toyota-shi, Aichi-ken, 471-8571 (JP); SHIN, Akinori, Toyota-shi, Aichi-ken, 471-8571 (JP); TODAKA, Junichi, Toyota-shi, Aichi-ken, 471-8571 (JP); NAKANISHI, Kyosuke, Toyota-shi, Aichi-ken, 471-8571 (JP); HASEGAWA, Hideo, Toyota-shi, Aichi-ken, 471-8571 (JP); TSUJINO, Miki, Toyota-shi, Aichi-ken, 471-8571 (JP); ONISHI, Kanta, Toyota-shi, Aichi-ken, 471-8571 (JP)
(74) Representative: Simmons & Simmons

(57) **Abstract**

An in-vehicle system includes a display device (22, 23) and an information processing apparatus (10) configured to output information via the display device (22, 23), wherein the display device (22, 23) includes a pair of display units (27) that are provided in a forward portion of a driver's seat (2) in a passenger compartment, are disposed at positions on both sides of a steering wheel (4) while protruding rearward of an instrument unit (21) disposed in front of the steering wheel (4), and have touch panels (25); and the information processing apparatus (10) has a controller (100) configured to execute outputting, to the display device (22, 23), information for changing the screens of the pair of display units (27) according to a drive mode.

## Description

### BACKGROUND

### Technical Field

The present disclosure relates to an in-vehicle system and an information processing apparatus.

### Description of the Related Art

In vehicles, it is known to switch a screen of a meter according to a drive mode such as a normal mode, a sport mode or the like (see, for example, Patent Literature 1).

### Citation List

### Patent Literature

Patent Document 1: Japanese Unexamined Patent Application Publication No. 2010-190084

### SUMMARY

An object of the present disclosure is to provide more appropriate information to a user.

One aspect of the present disclosure is directed to an in-vehicle system including a display device, and an information processing apparatus configured to output information via the display device,
the display device including a pair of display units that are provided in a forward portion of a driver's seat in a passenger compartment, are disposed at positions on both sides of a steering wheel while protruding rearward of an instrument unit disposed in front of the steering wheel, and have touch panels,
the information processing apparatus including a controller and a storage,
the controller being configured to execute:
   receiving signals from the touch panels;
   identifying a drive mode according to the signals received from the touch panels and information stored in the storage; and
   generating information for changing screens of the pair of display units according to the identified drive mode thereby to output the information to the display device.

Another aspect of the present disclosure is directed to an in-vehicle system including a display device, and an information processing apparatus configured to output information via the display device,
the display device including a pair of display units that are provided in a forward portion of a driver's seat in a passenger compartment, are disposed at positions on both sides of a steering wheel while protruding rearward of an instrument unit disposed in front of the steering wheel, and have touch panels,
the information processing apparatus including a controller configured to execute:
   outputting, to the display device, information for changing screens of the pair of display units according to a drive mode.

A further aspect of the present disclosure is directed to an information processing apparatus configured to output information via a display device,
the display device including a pair of display units that are provided in a forward portion of a driver's seat in a passenger compartment, are disposed at positions on both sides of a steering wheel while protruding rearward of an instrument unit disposed in front of the steering wheel, and have touch panels,
the information processing apparatus including a controller configured to execute:
   outputting, to the display device, information for changing screens of the pair of display units according to a drive mode.

In addition, other aspects of the present disclosure are directed to a vehicle equipped with the in-vehicle system, an information processing method executed by the information processing apparatus, a program for causing a computer to execute the information processing method, and a non-transitory computer-readable storage medium storing the program.

According to the present disclosure, it is possible to provide more appropriate information to a user.

### BRIEF DESCRIPTION OF THE DRAWINGS

FIG. 1 is a view illustrating a passenger compartment of a vehicle;
FIG. 2 is an enlarged view of surroundings of a steering wheel;
FIG. 3 is a diagram schematically illustrating an example of a hardware configuration of the vehicle;
FIG. 4 is a diagram illustrating a functional configuration of an ECU;
FIG. 5 is a diagram illustrating an example of a home screen of an outer display;
FIG. 6 is a diagram illustrating an example of a drive mode setting screen;
FIG. 7 is a diagram illustrating an example of a suspension setting screen;
FIG. 8 is a diagram illustrating an example of an analog display screen;
FIG. 9 is a diagram illustrating an example of an air conditioner setting screen;
FIG. 10 is a diagram illustrating an example of a massage seat setting screen; and
FIG. 11 is a flowchart of processing in the ECU when a drive mode is switched according to a first embodiment.

### DESCRIPTION OF THE EMBODIMENTS

In recent years, as automobiles have become more sophisticated, the displays used to provide information are becoming larger, or the number of displays is increasing. For example, a method has been proposed in which a large-sized touch panel display is disposed between a driver's seat and a front passenger seat in a front portion of a passenger compartment, to collectively perform vehicle-related operations and information provision. However, in such a method, the line of sight of a driver moves significantly when the driver operates the components included in the vehicle or checking output information. For the driving safety of the vehicle, it is preferable to minimize the movement of the driver's line of sight.

In general, a display device such as a liquid crystal display or the like is often disposed in the area in front of the driver's seat where an instrument panel is conventionally located, and by outputting information to the display device, the movement of the driver's line of sight can be minimized. However, the size of the display device disposed in front of the driver's seat is limited, and hence, it is not always possible to display all the pieces of information required by the driver. In addition, if these pieces of information are simultaneously output in the same area, for example, information necessary for driving the vehicle and auxiliary information such as entertainment will be mixed together, which will hinder intuitive information transmission.

In addition, there are also problems with the layout of an input interface for operation. For example, a steering wheel is known that has cursor keys and push button switches to enable input operations while driving. However, in such an input interface, the layout of buttons and the like is fixed, making it difficult to adapt to a plurality of different targets. For example, in a case where the set temperature of an air conditioner can be raised or lowered, it can be changed by using two physical keys, but it is not possible to directly specify any point on a map by using the physical keys. A form of operation by a touch panel could be considered, but as mentioned above, the touch panel display located in the front portion of the passenger compartment is far from the steering wheel, so in addition to the movement of the driver's line of sight, the driver's hands also move significantly.

In contrast, an in-vehicle system, which is one aspect of the present disclosure, includes a display device and an information processing apparatus configured to output information via the display device, wherein the display device includes a pair of display units that are provided in a forward portion of a driver's seat in a passenger compartment, are disposed at positions on both sides of a steering wheel while protruding rearward of an instrument unit disposed in front of the steering wheel, and have touch panels.

The display device includes the pair of display units disposed at positions on both sides of the steering wheel. Also, the pair of display units are each configured to allow touch operations using a touch panel. The pair of display units are preferably disposed at positions protruding in the front and rear direction of the vehicle more toward the rear thereof than the instrument unit located in front of the steering wheel (typically, a meter panel where a speedometer is located), i.e., closer to the driver. By providing the pair of display units at such positions, it is possible to arrange the touch panels in the vicinity of the portions of the steering wheel held by the driver. In other words, it is possible to minimize the time that the driver has to release his/her hands from the steering wheel during operation. Note that the steering wheel does not necessarily have to be circular as long as it has a grip portion and is rotated to perform a steering operation.

The pair of display units presents, for example, information related to control of the vehicle or information related to convenience of occupants of the vehicle to a user. The information related to the convenience of the occupants of the vehicle may include information for providing entertainment to the occupants of the vehicle, information related to comfort of the occupants, or the like. The information related to the comfort and convenience of the occupants includes, for example, interfaces for operating audio, navigation, air conditioner, telephone, clock, voice assistant, etc., as well as information about the operating status of these devices. The information related to the control of the vehicle 1 includes information about the driving or traveling of the vehicle 1. The information related to the control of the vehicle includes, for example, interfaces for operating headlights, wipers, side mirrors, ADAS (Advanced Driver Assistance System), drive mode, vehicle height, steering wheel position, seat position, etc., as well as information related to the operating status of these devices.

Here, the vehicle has a plurality of drive modes, where for example, the user can switch between the drive modes. The plurality of drive modes include, for example, normal, sport, eco, comfort, and custom modes. In each mode, the driving or traveling state required by the user is different. Then, by switching the screens to be displayed on the pair of display units according to the respective modes, it is possible to present the user with the information corresponding to the driving state desired by the user.

Therefore, the information processing apparatus has a controller configured to execute outputting, to the display device, information for changing the screens of the pair of display units according to a drive mode. The controller outputs the information to the display device, so that the screens of the pair of display units can be switched according to the drive mode. In this way, more appropriate information can be provided to the user.

Hereinafter, embodiments of the present disclosure will be described based on the accompanying drawings. The configurations of the following embodiments are examples, and the present disclosure is not limited to the configurations of the embodiments. In addition, the following embodiments can be combined with one another as long as such combinations are possible and appropriate.

### <First Embodiment>

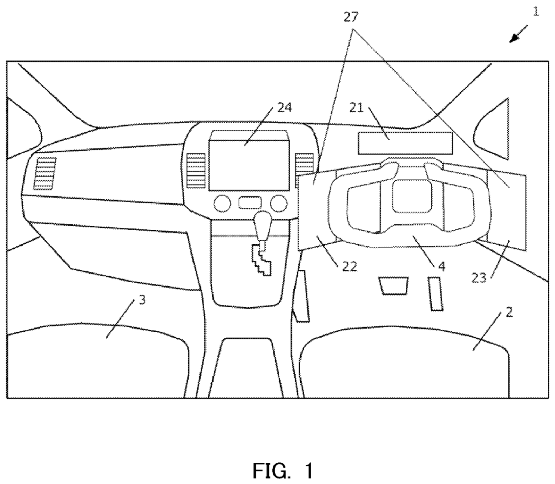

FIG. 1 is a view illustrating a passenger compartment of a vehicle 1. As illustrated in FIG. 1, a driver's seat 2 and a front passenger seat 3 are provided in the passenger compartment of the vehicle 1. Note that the vehicle 1 of the present embodiment is a right-hand drive vehicle, and the driver's seat 2 is provided on the right side of the vehicle 1. A steering wheel 4 is disposed on the forward side of the driver's seat 2. Note that the steering wheel 4 may be circular or may be U-shaped (a so-called irregular steering wheel), as illustrated. The steering wheel 4 is connected to a steering device of the vehicle 1 via a steering column. The steering column is covered by a column cover.

The front passenger seat 3 is provided on the left side of the driver's seat 2, and a center display 24 is disposed on the front side of the vehicle at an intermediate position between the driver's seat 2 and the front passenger seat 3. The center display 24 displays, for example, auxiliary information such as car navigation, or contents related to entertainment such as audio and television.

A meter display 21 is provided on the vehicle front side of the steering wheel 4. The meter display 21 is a full-screen display that is positioned in front of the driver's seat 2 to provide various types of information to the driver of the vehicle 1. The meter display 21 displays information necessary for driving the vehicle such as, for example, a speed of the vehicle (vehicle speed), an engine speed (if the vehicle 1 has an engine), a charge and discharge condition (if the vehicle 1 has a drive battery), and a travel distance. The meter display 21 is an example of a "meter unit" in the present disclosure.

A pair of display devices 27 are provided in a forward portion of the driver's seat 2 of the passenger compartment. The pair of display devices 27 includes touch panel displays respectively disposed at positions on both sides of the steering wheel 4. In the present embodiment, a display disposed closer to the inner side of the vehicle is referred to as an inner display 22, and a display disposed closer to the outer side of the vehicle is referred to as an outer display 23. The inner display 22 and the outer display 23 are connected to an instrument panel of the vehicle 1.

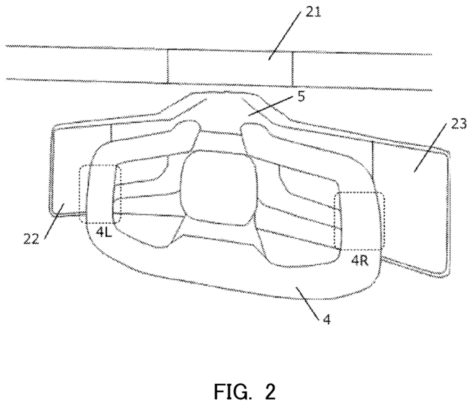

Referring to FIG. 2, the detailed structures of the inner display 22 and the outer display 23 will be described. FIG. 2 is an enlarged view of surroundings of the steering wheel 4. The inner display 22 and the outer display 23 are vertically long displays, and are connected to a support portion 5 which is a member supporting each display. The support portion 5 has a shape protruding in the left and right direction of the steering wheel 4. The outer display 23 is connected to the right end of the support portion 5 when facing the vehicle front side, and the inner display 22 is connected to the left end thereof when facing the vehicle front side. Accordingly, the display screens can be located in the vicinity of grip portions of the steering wheel 4.

Here, note that the above description is an example in the case where the vehicle 1 is a right-hand drive vehicle, whereas in the case where the vehicle 1 is a left-hand drive vehicle, the left and right sides are reversed. That is, the outer display 23 is connected to the left end of the support portion 5 when facing the front side of the vehicle, and the inner display 22 is connected to the right end of the support portion 5 when facing the front side of the vehicle.

The support portion 5 may also serve as a column cover that covers the steering column. The support portion 5 extends in the left and right direction (vehicle width direction) from its portion through which the steering column passes, and each of its left and right portions extends toward the vehicle rear side and is bent in its middle so that the angle thereof with respect to the left and right direction of the steering wheel becomes smaller.

Further, the inner display 22 and the outer display 23 are angled with respect to the left and right direction of the steering wheel 4, and are each disposed so as to be inclined toward the steering wheel side. That is, the inner display 22 is disposed to protrude more toward the rear of the vehicle 1 the more it is inside the vehicle 1, and the outer display 23 is disposed to protrude more toward the rear of the vehicle 1 the more it is outside the vehicle 1. In this manner, the inner display 22 and the outer display 23 are each disposed so as to face the driver.

An area 4R indicated by a broken line in FIG. 2 is a portion (grip portion) where the steering wheel 4 is gripped or held by the right hand, and an area 4L indicated by a broken line in FIG. 2 is a portion (grip portion) where the steering wheel 4 is gripped or held by the left hand. The inner display 22 and the outer display 23 are disposed closer to the vehicle front side than the grip portions of the steering wheel 4 in the front and rear direction of the vehicle 1. By forming the support portion 5 in the above-described shape, the positions of the inner display 22 and the outer display 23 in the vehicle front and rear direction can be brought closer to the grip portions of the steering wheel 4. Therefore, it is possible to further reduce the amount of hand movement when the driver performs a touch operation on the inner display 22 or the outer display 23 during driving.

The meter display 21, the inner display 22, and the outer display 23 are all displays each having a touch panel. Here, it is sufficient that at least the inner display 22 and the outer display 23 each have a touch panel. As a touch panel, for example, a touch panel of a pressure-sensitive type that detects a pressure applied to the panel by the user, a touch panel of an electrostatic capacitance type that detects a change in electrostatic capacitance when the user presses the panel, or the like can be adopted. The displays are each, for example, an LCD (Liquid Crystal Display), EL (Electroluminescence) panel, or the like. Note that in the following, when a user touches a screen, it means that the user touches a touch panel.

The inner display 22 displays, for example, information related to the convenience of occupants of the vehicle 1. The information related to the convenience of the occupants of the vehicle 1 includes information for providing entertainment to the occupants of the vehicle 1. The information related to the convenience of the occupants of the vehicle 1 may include information related to the comfort of the occupants. The information related to the comfort and convenience of the occupants includes, for example, information about switches, buttons, etc., for operating audio, navigation device, air conditioner, telephone, clock, voice assistant, etc., and information about the operating status of these devices.

The outer display 23 displays, for example, information related to the control of the vehicle 1. The information related to the control of the vehicle 1 includes information related to the driving or traveling of the vehicle 1. Specifically, the information related to the control of vehicle 1 includes, for example, information about switches, buttons, etc., for operating headlights, wipers, side mirrors, ADAS, drive mode, suspension, steering wheel position, and seat position, as well as information about the operating status of these devices. By displaying the information related to the control of the vehicle 1 on the outer display 23, it is possible to prevent passengers other than the driver from operating the information related to the control of the vehicle 1.

Here, note that the information to be displayed on the inner display 22 and the outer display 23 is not limited to the above. The inner display 22 may display information related to the control of the vehicle 1, and the outer display 23 may display information related to the convenience of the occupants of the vehicle 1. In addition, information to be displayed on the inner display 22 and the outer display 23 can be determined in an optional manner.

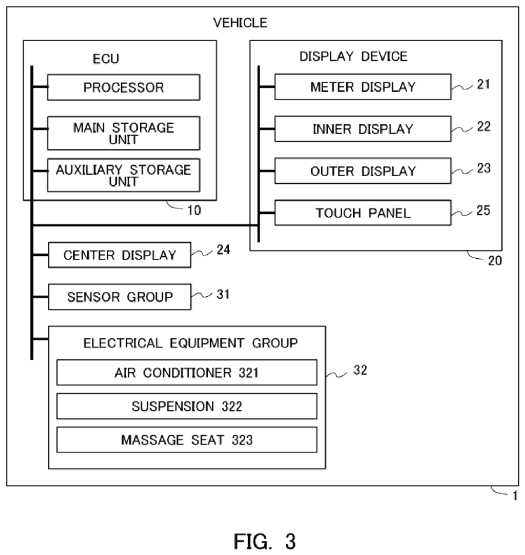

FIG. 3 is a diagram schematically illustrating an example of a hardware configuration of the vehicle 1. The vehicle 1 includes an ECU 10, the display device 20, the center display 24, a sensor group 31, and an electrical equipment group 32. The ECU 10 can be configured as a computer having a processor (CPU, GPU or the like), a main storage device (RAM, ROM, or the like), and an auxiliary storage device (EPROM, hard disk drive, removable medium, or the like). An operating system (OS), various programs, various tables, etc., are stored in the auxiliary storage device, and by executing the programs stored therein, it is possible to realize each function (software module) that meets a predetermined purpose, as will be described later. However, some or all of the functions may be realized as a hardware module by a hardware circuit such as, for example, an ASIC, an FPGA or the like. The display device 20, the center display 24, the sensor group 31, and the electrical equipment group 32 are connected to the ECU 10. The ECU 10 is an example of an information processing apparatus.

The display device 20 includes the meter display 21, the inner display 22, the outer display 23, and a touch panel 25. The touch panel 25 is a unit for detecting touch operations performed on the meter display 21, the inner display 22, and the outer display 23. The meter display 21, the inner display 22, and the outer display 23 are each provided with the touch panel 25, so that they can be operated by touch.

The sensor group 31 is a set of a plurality of sensors for obtaining sensor data used in driving the vehicle 1. The sensors may obtain physical quantities or may obtain image data or the like. The sensor group 31 includes, for example, a sensor that detects the state of the vehicle 1, a sensor that detects the action or motion of the driver, and the like. The sensor group 31 includes, for example, a speed sensor, an acceleration sensor, an accelerator opening sensor that detects the position of an accelerator pedal, a brake sensor that detects the position of a brake pedal, a steering angle sensor that detects the angle of a steering wheel, an engine rotation speed sensor that detects the rotation speed of an engine, a water temperature sensor that detects the temperature of engine cooling water, an oil temperature sensor that detects the temperature of engine oil, an oil pressure sensor that detects the pressure of engine oil, a sensor that detects the pressure of intake air of the engine, a yaw rate sensor, a winker switch sensor (a sensor that detects the state of a direction indicator switch), a shift position sensor, a sensor that detects position information (GPS sensor), a sensor that detects the temperature inside the vehicle, a sensor that detects the temperature outside the vehicle, a radar that measures the distance to an object, etc.

The electrical equipment group 32 is a collection of electrical equipment used in the vehicle 1. The electrical equipment group 32 includes, for example, an air conditioner 321, a suspension 322, and a massage seat 323. The electrical equipment group 32 may also include a navigation device, an audio system, a telephone, wipers, headlights, side mirrors, and a voice assistant. Note that the air conditioner 321 according to the present embodiment has a function of automatically adjusting the temperature in the passenger compartment to a temperature set by the user. In addition, the suspension 322 according to the present embodiment has a function of adjusting the vehicle height using the pressure of air, and a function of adjusting the damping force of a shock absorber. Further, the massage seat 323 according to the present embodiment has a function of performing massage in the driver's seat 2 and the front passenger seat 3 by using the pressure of air (seat refreshing function).

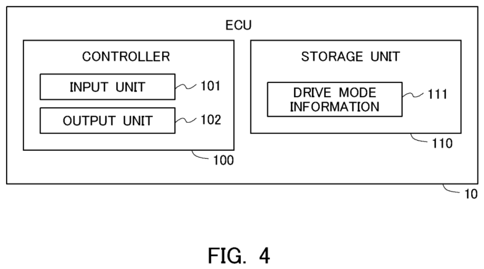

FIG. 4 is a diagram illustrating an example of a functional configuration of the ECU 10. The ECU 10 includes a controller 100 and a storage unit 110 as functional components. The controller 100 is a functional component provided, for example, by a processor executing various programs stored in an auxiliary storage unit. The controller 100 includes an input unit 101 and an output unit 102. The storage unit 110 is a means for storing information, and includes a main storage unit and the auxiliary storage unit.

The input unit 101 receives a signal from the touch panel 25, and determines a user's input operation via the touch panel 25. The input unit 101 identifies the location touched by the user. In addition, when the user touches the touch panel 25, the input unit 101 can determine input operations such as flick, swipe, tap, pinch, double tap, long tap, multi-tap, etc. The relationship between the user's finger movements and the user's input operations is stored in the storage unit 110.

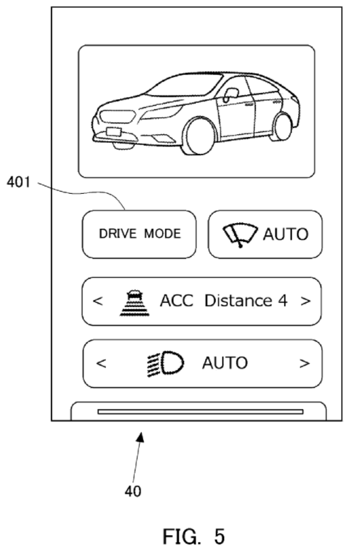

In addition, the input unit 101 determines which drive mode is selected by the user. Here, FIG. 5 is a diagram illustrating an example of a home screen 40 of the outer display 23. The home screen 40 is generated by the output unit 102 to be described later. The home screen 40 is a screen that is normally displayed on the outer display 23 while the vehicle is driving. On the home screen 40, a GUI component 401 is arranged for transitioning to a screen for setting a drive mode. The input unit 101 identifies that the user has touched the GUI component 401.

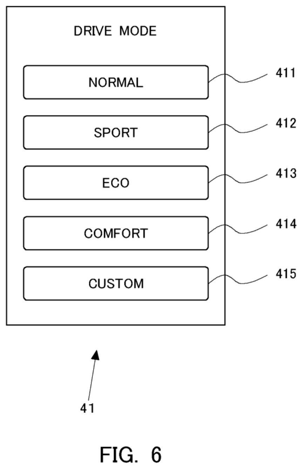

FIG. 6 is a diagram illustrating an example of a drive mode setting screen 41. When the user touches the GUI component 401 in FIG. 5, the screen transitions to the drive mode setting screen 41 illustrated in FIG. 6. The drive mode setting screen 41 is generated by the output unit 102 to be described later. By changing the drive mode, it is possible to change the traveling performance and the like of the vehicle 1. The drive mode includes modes such as normal, sport, eco, comfort, and custom. The normal mode is a drive mode in which fuel efficiency, quietness, and motion performance are well balanced, and is suitable for traveling in an urban area. The sport mode is a drive mode that improves acceleration response by controlling the hybrid system, transmission, and engine, and that provides a sporty driving experience by further comprehensively controlling the steering and the suspension 322. The eco mode is a drive mode that assists the driver's accelerator operation by making the throttle characteristics gentle. Also, the eco mode is a drive mode that suppresses the operation of the air conditioner 321 thereby to improve fuel economy. The comfort mode is a drive mode that provides a more comfortable ride by controlling the suspension 322. The custom mode is a drive mode that allows the functions of the power train, the steering, the suspension 322, and the air conditioner 321 to be set according to the user's preferences. Note that the sport mode is an example of a first mode, the eco mode is an example of a second mode, and the comfort mode is an example of a third mode.

The drive mode setting screen 41 illustrated in FIG. 6 has a normal mode button 411, a sport mode button 412, an eco mode button 413, a comfort mode button 414, and a custom mode button 415 arranged thereon. The user can switch the drive mode by touching these buttons. The input unit 101 detects the button touched by the user to determine the traveling mode selected by the user.

The output unit 102 generates screens to be displayed on the inner display 22 and the outer display 23. For example, the output unit 102 generates the home screen 40 illustrated in FIG. 5 during normal traveling. Also, in response to the user touching the GUI component 401 for transitioning to a screen for setting the drive mode, the drive mode setting screen 41 is generated. In addition, the output unit 102 generates the screens to be displayed on the inner display 22 and the outer display 23 according to the set drive mode. The relationship between drive modes and screens to be displayed is stored in the storage unit 110 as drive mode information 111.

When the user touches the normal mode button 411, the output unit 102 generates the home screen 40 in such a manner that the home screen 40 is displayed on the outer display 23, for example. Further, the output unit 102 may generate on the inner display 22 a home screen corresponding to the inner display 22. The output unit 102 outputs the home screen thus generated to the display device 20.

When the user touches the sport mode button 412, the output unit 102 generates screens such that nothing is displayed on the inner display 22 and the outer display 23. For example, the output unit 102 may generate screens that are entirely black. In addition, the output unit 102 may generate a command to turn off the inner display 22 and the outer display 23. In other words, the output unit 102 may generate a command to stop displaying the screens on the inner display 22 and the outer display 23 when in the sport mode. As a result, nothing is displayed on the inner display 22 and the outer display 23. At this time, the output unit 102 may, for example, stop the supply of power to a backlight in the case of a liquid crystal display, or may stop the supply of power to an organic substance in the case of an organic EL display. In this way, by dimming the inner display 22 and the outer display 23, the driver can more easily concentrate on driving. In addition, when the sport mode is selected, the information displayed on the inner display 22 and the outer display 23 may sometimes be unnecessary, and hence, there is no problem even if nothing is displayed on the inner display 22 and the outer display 23, depending on the driver.

Note that, for example, the screens of the inner display 22 and the outer display 23 may be configured to be resumed by the user tapping on the inner display 22 and the outer display 23 that have been turned off. That is, the touch panel 25 may be configured to be able to detect user's operations even when the inner display 22 and the outer display 23 are turned off. At this time, the screens may return to, for example, the home screens.

In addition, when the user touches the sport mode button 412, the output unit 102 may display a setting screen for the suspension 322 on the inner display 22 or the outer display 23. For example, the output unit 102 may display a setting screen for the damping force of the shock absorber on the inner display 22 or the outer display 23. Also, for example, the output unit 102 may display a setting screen for the vehicle height on the inner display 22 or the outer display 23.

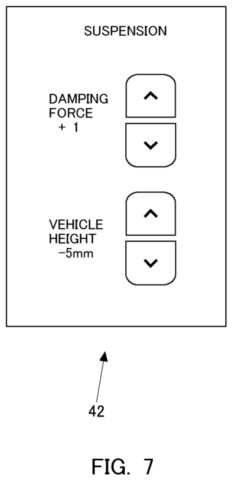

FIG. 7 is a diagram illustrating an example of a setting screen 42 for the suspension 322. The setting screen 42 for the suspension 322 is displayed on the outer display 23, for example. The setting screen 42 for the suspension 322 is a screen on which the damping force of the shock absorber and the vehicle height can be set respectively. The damping force and the vehicle height are increased by touching a button with an up arrow, and are decreased by touching a button with a down arrow. The output unit 102 generates the setting screen 42 for the suspension 322 illustrated in FIG. 7, and outputs the setting screen 42 to the display device 20.

Moreover, when the user touches the sport mode button 412, the output unit 102 may change the display mode of the content to be displayed on the inner display 22 or the outer display 23 from digital to analog. For example, meters for capturing conditions related to driving, such as a speedometer, a tachometer, a water temperature meter, an oil temperature meter, an oil pressure meter, a boost meter, etc., may be displayed in analog form on the inner display 22 or the outer display 23. Note that these meters may be displayed on the meter display 21 simultaneously. At this time, the meter display 21 may be a digital display or an analog display.

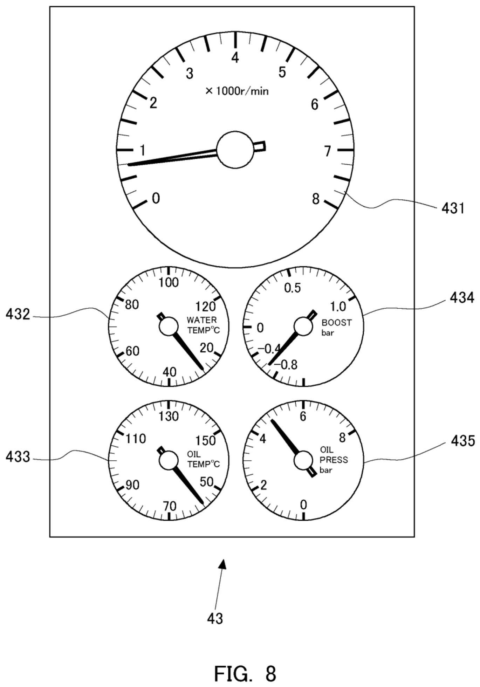

FIG. 8 is a diagram illustrating an example of an analog display screen 43. On the analog display screen 43, a tachometer 431, a water temperature meter 432, an oil temperature meter 433, a boost meter 434, and an oil pressure meter 435 are displayed to imitate analog meters. By displaying the analog meters in this manner, a sporty look can be created.

Further, when the user touches the eco mode button 413, the output unit 102 displays on the inner display 22 or the outer display 23 a setting screen for electrical equipment that can improve fuel efficiency and electricity efficiency. The output unit 102 may display, for example, a setting screen for the air conditioner 321 on the inner display 22 or the outer display 23. Here, since it is assumed that the user who selects the eco mode wants to improve the fuel efficiency and the electricity efficiency, it is possible to display a screen desired by the user by displaying a setting screen for further improving the fuel efficiency and the electricity efficiency on the inner display 22 or the outer display 23.

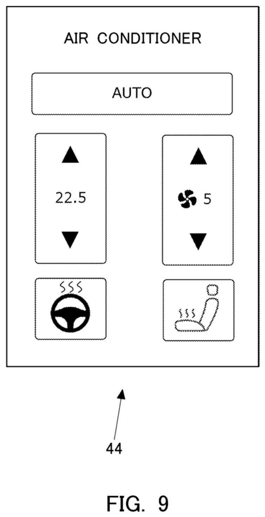

FIG. 9 is a diagram illustrating an example of a setting screen 44 for the air conditioner 321. On the setting screen 44 for the air conditioner 321, it is possible to set the temperature and air volume of the car air conditioner, as well as other air conditioning devices to be operated (a steering heater, a seat heater, a defroster, and the like). The output unit 102 generates the setting screen 44 for the air conditioner 321 illustrated in FIG. 9, and outputs the setting screen 44 to the display device 20.

Note that the air conditioner 321 is equipment of the vehicle 1 to be controlled by commands from the outside, but since it is related to the comfort of the occupants, the setting screen 44 for the air conditioner 321 is displayed on the inner display 22, not on the outer display 23. However, only when the comfort mode is selected on the outer display 23, the output unit 102 may display the setting screen 44 for the air conditioner 321 on the outer display 23.

In addition, when the user touches the comfort mode button 414, the output unit 102 displays the setting screen for electrical equipment that can enhance comfort on the inner display 22 or the outer display 23. The output unit 102 displays a setting screen for the massage seat 323 on the inner display 22, for example.

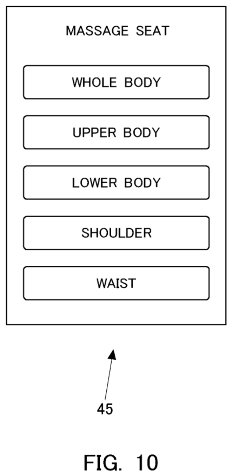

FIG. 10 is a diagram illustrating an example of a setting screen 45 for the massage seat 323. The massage seat 323 has a massaging function by inflating air bags built in the driver's seat 2 and the front passenger seat 3 to push the body of each user. There are five massage courses available, allowing the user to select the desired part of the body to be massaged from among the whole body, the upper body, the lower body, the shoulders, and the waist. The output unit 102 generates the setting screen 45 for the massage seat 323 illustrated in FIG. 10, and transmits the setting screen 45 to the display device 20.

Here, note that the setting screen 45 for the massage seat 323 is normally displayed on the inner display 22, but the output unit 102 may display the setting screen 45 for the massage seat 323 on the outer display 23 only when the comfort mode is selected on the outer display 23. Also, note that, when the user does not operate the setting screen 45 for the massage seat 323 displayed on the inner display 22 or the outer display 23 for a predetermined period of time or more, the output unit 102 may generate a home screen and output the home screen to the display device 20.

The output unit 102 outputs a command to display the screen as described above to the display device 20. The output unit 102 generates a signal for displaying a screen for each frame, and transmits the signal to the display device 20.

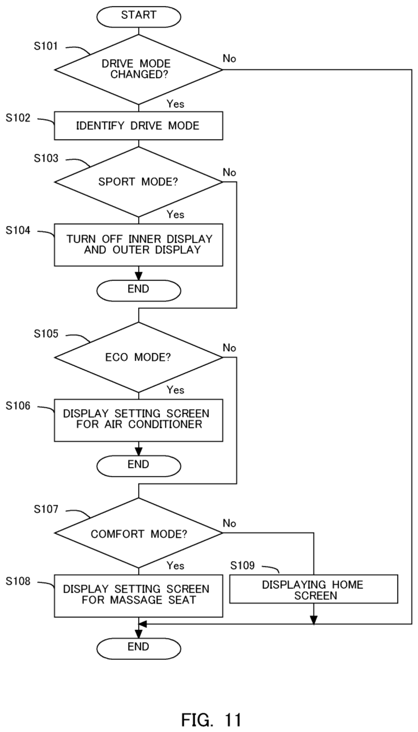

Next, processing in the ECU 10 when the drive mode is switched will be described. FIG. 11 is a flowchart of the processing in the ECU when the drive mode is switched according to a first embodiment. The processing illustrated in FIG. 11 is executed in the ECU 10 at predetermined time intervals.

In step S101, the input unit 101 determines whether or not the user has input a change to the drive mode on the touch panel 25. The input unit 101 determines that an input has been received from the user, for example, when detecting, by a signal from the touch panel 25, that the user has touched the drive mode setting screen 41 illustrated in FIG. 6. If the input unit 101 makes an affirmative determination in step S101, the processing proceeds to step S102, whereas if the input unit 101 makes a negative determination in step S101, this routine ends.

In step S102, the input unit 101 identifies the drive mode selected by the user. For example, the input unit 101 identifies the button touched by the user based on the position touched by the user and the position of each button illustrated in FIG. 6. Note that the position of each button illustrated in FIG. 6 is stored in the storage unit 110.

In step S103, the input unit 101 determines whether or not the sport mode is selected by the user. At this time, the input unit 101 determines whether or not the position touched by the user is within the range of the sport mode button 412. If the input unit 101 makes an affirmative determination in step S103, the processing proceeds to step S104, whereas if the input unit 101 makes a negative determination, the processing proceeds to step S105.

In step S104, the output unit 102 generates screens such that nothing is displayed on the inner display 22 and the outer display 23. The output unit 102 may generate screens that are entirely painted in black, or may generate a command to stop outputting screens to the inner display 22 and the outer display 23. The information generated by the output unit 102 at this time is an example of information for stopping the display of the screens. The output unit 102 may transmit, to the display device 20, a command to display screens that are entirely black, or may transmit, to the display device 20, a command to stop outputting screens to the inner display 22 and the outer display 23. When the processing of step S104 is completed, this routine ends.

In addition, in step S105, the input unit 101 determines whether or not the user has selected the eco mode. At this time, the input unit 101 determines whether or not the position touched by the user is within the range of the eco mode button 413. If the input unit 101 makes an affirmative determination in step S105, the processing proceeds to step S106, whereas if the input unit 101 makes a negative determination, the processing proceeds to step S107.

In step S106, the output unit 102 generates the setting screen 44 for the air conditioner 321 illustrated in FIG. 9. The output unit 102 obtains the set temperature and the air volume at the current point in time from the storage unit 110 to generate the setting screen 44. The output unit 102 transmits a command to the display device 20 to display the setting screen 44 for the air conditioner 321. When the processing of step S106 is completed, this routine ends.

Further, in step S107, the input unit 101 determines whether or not the comfort mode has been selected by the user. At this time, the input unit 101 determines whether or not the position touched by the user is within the range of the comfort mode button 414. If the input unit 101 makes an affirmative determination in step S107, the processing proceeds to step S108, whereas if the input unit 101 makes a negative determination, the processing proceeds to step S109.

In step S108, the output unit 102 generates the setting screen 45 for the massage seat 323 illustrated in FIG. 10. The output unit 102 transmits a command to the display device 20 to display the setting screen 45 for the massage seat 323. When the processing of step S108 is completed, this routine ends.

In step S109, the output unit 102 generates the home screen 40 illustrated in FIG. 5. In this step S109, the normal mode or the custom mode is selected. In this case, the output unit 102 displays the home screen on the inner display 22 and the outer display 23, for example. The output unit 102 transmits, for example, a command to display the home screen 40 to the display device 20. Note that the present invention is not limited to this. For example, when the custom mode is selected, the output unit 102 may generate an image that shows the customization state of the electrical equipment group 32, and transmit the image to the display device 20. When the processing of step S109 is completed, this routine ends.

Here, note that in step S104, the output unit 102 turns off the inner display 22 and the outer display 23, for example, but alternatively, the output unit 102 may generate the setting screen 42 for the suspension 322 illustrated in FIG. 7. The output unit 102 obtains the damping force and the vehicle height at the current point in time from the storage unit 110, and generates the setting screen 42 for the suspension 322. Then, the output unit 102 may transmit to the display device 20 a command to display the setting screen 42 for the suspension 322. In addition, in step S104, the output unit 102 may generate the analog display screen 43 illustrated in FIG. 8, instead of turning off the inner display 22 and the outer display 23. The output unit 102 generates the analog display screen 43 based on the detection values of the sensor group 31. Then, the output unit 102 may transmit a command to display the analog display screen 43 to the display device 20.

Although in the present embodiment, the screens corresponding to the three modes of the sport mode, the eco mode, and the comfort mode are described, but it is sufficient if the output unit 102 may generate a screen for at least one of a plurality of drive modes.

As described above, according to the present embodiment, the screens of the inner display 22 and the outer display 23 are switched according to the drive mode, so that it is possible to present more appropriate information to the user. In addition, by displaying a setting screen according to the drive mode, the user can avoid the trouble of searching for the setting screen by himself or herself.

### <Other Embodiments>

The above embodiment is merely an example, but the present disclosure can be implemented with appropriate modifications without departing from the spirit thereof. The processing and/or means (devices, units, etc.) described in the present disclosure can be freely combined and implemented as long as no technical contradiction occurs. In addition, the processing described as being performed by a single device or unit may be shared and performed by a plurality of devices or units. Alternatively, the processing described as being performed by different devices or units may be performed by a single device or unit. In a computer system, it is possible to flexibly change the hardware configuration that can achieve each function of the computer system.

In the above embodiment, an example has been described in which the ECU 10 of the vehicle 1 functions as an information processing apparatus, but the present disclosure is not limited to this. For example, a user's mobile terminal or an external server may function as an information processing apparatus.

The present disclosure can also be realized by supplying to a computer a computer program in which the functions described in the above embodiment are implemented, and reading out and executing the program by means of one or more processors included in the computer. Such a computer program may be provided to the computer by a non-transitory computer readable storage medium that can be connected to a system bus of the computer, or may be provided to the computer via a network. The non-transitory computer readable storage medium includes, for example, any type of disk such as a magnetic disk (e.g., a floppy (registered trademark) disk, a hard disk drive (HDD), etc.), an optical disk (e.g., a CD-ROM, a DVD disk, a Blu-ray disk, etc.) or the like, a read only memory (ROM), a random access memory (RAM), an EPROM, an EEPROM, a magnetic card, a flash memory, an optical card, or any type of medium suitable for storing electronic commands or instructions.

## Claims

1. An in-vehicle system comprising a display device (22, 23), and an information processing apparatus (10) configured to output information via the display device (22, 23),
the display device (22, 23) comprising a pair of display units (27) that are provided in a forward portion of a driver's seat (2) in a passenger compartment, are disposed at positions on both sides of a steering wheel (4) while protruding rearward of an instrument unit (21) disposed in front of the steering wheel (4), and have touch panels (25),
the information processing apparatus (10) comprising a controller (100) and a storage (110),
the controller (100) being configured to execute:
receiving (S101) signals from the touch panels (25);
identifying (S102) a drive mode according to the signals received from the touch panels (25) and information stored in the storage (110); and
generating (S104, S106, S108) information for changing screens of the pair of display units (27) according to the identified drive mode thereby to output the information to the display device (22, 23).

2. An in-vehicle system comprising a display device (22, 23), and an information processing apparatus (10) configured to output information via the display device (22, 23),
the display device (22, 23) comprising a pair of display units (27) that are provided in a forward portion of a driver's seat (2) in a passenger compartment, are disposed at positions on both sides of a steering wheel (4) while protruding rearward of an instrument unit (21) disposed in front of the steering wheel (4), and have touch panels (25),
the information processing apparatus (10) comprising a controller (100) configured to execute:
outputting (S104, S106, S108), to the display device (22, 23), information for changing screens of the pair of display units (27) according to a drive mode.

3. The in-vehicle system according to claim 2, wherein
the pair of display units (27) are disposed on a vehicle (1) front side of a grip portion (4L, 4R) of the steering wheel (4) in a front and rear direction of the vehicle (1).

4. The in-vehicle system according to claim 2 or claim 3, wherein
the information processing apparatus (10) includes a storage (110) configured to store a relationship between the drive mode and the screens of the pair of display units (27).

5. The in-vehicle system according to any of claims 2 to 4, wherein
the controller (100) determines the drive mode in response to an input to the touch panels (25).

6. The in-vehicle system according to any of claims 2 to 5, wherein
the controller (100) outputs, to the display device (22, 23), information about a setting screen for electrical equipment (32) that is included in the vehicle (1) and is related to the drive mode, as the information for changing the screens of the pair of display units (27) according to the drive mode.

7. The in-vehicle system according to any of claims 2 to 6, wherein
the controller (100) outputs (S104), to the display device (22, 23), information for stopping display of the screens of the pair of display units (27), when the drive mode is a first mode in which traveling performance of the vehicle (1) is made higher than that in other modes.

8. The in-vehicle system according to any of claims 2 to 7, wherein
the controller (100) outputs (S104), to the display device (22, 23), information for displaying, on the pair of display units (27), a setting screen for electrical equipment (32) related to traveling performance of the vehicle (1), when the drive mode is a first mode in which the traveling performance of the vehicle (1) is made higher than that in other modes.

9. The in-vehicle system according to any of claims 2 to 8, wherein
the controller (100) outputs (S104), to the display device (22, 23), information for displaying, on the pair of display units (27), an analog meter that displays a physical quantity indicating a state of the vehicle (1), when the drive mode is a first mode in which traveling performance of the vehicle (1) is made higher than that in other modes.

10. The in-vehicle system according to any of claims 2 to 9, wherein
the controller (100) outputs (S106), to the display device (22, 23), information for displaying a setting screen for an air conditioner of the vehicle (1) on the pair of display units (27), when the drive mode is a second mode in which fuel efficiency or electricity efficiency of the vehicle (1) is made higher than that in other modes.

11. The in-vehicle system according to any of claims 2 to 10, wherein
the controller (100) outputs (S108), to the display device (22, 23), information for displaying, on the pair of display units (27), a setting screen for electrical equipment (32) related to comfort of an occupant of the vehicle (1), when the drive mode is a third mode related to the comfort.

12. An information processing apparatus (10) configured to output information via a display device (22, 23),
the display device (22, 23) comprising a pair of display units (27) that are provided in a forward portion of a driver's seat (2) in a passenger compartment, are disposed at positions on both sides of a steering wheel (4) while protruding rearward of an instrument unit (21) disposed in front of the steering wheel (4), and have touch panels (25),
the information processing apparatus (10) comprising a controller (100) configured to execute:
outputting (S104, S106, S108), to the display device (22, 23), information for changing screens of the pair of display units (27) according to a drive mode.

13. The information processing apparatus (10) according to claim 12, wherein
the pair of display units (27) are disposed on a vehicle (1) front side of a grip portion (4L, 4R) of the steering wheel (4) in a front and rear direction of the vehicle (1).

14. The information processing apparatus (10) according to claim 12 or claim 13, further comprising:
a storage (110) configured to store a relationship between the drive mode and the screens of the pair of display units (27).

15. The information processing apparatus (10) according to any of claims 12 to 14, wherein
the controller (100) determines (S102) the drive mode in response to an input to the touch panels (25).
